# NEW EUROPEAN PATENT SPECIFICATION

(11) **EP 0 563 305 B2**
(45) Date of publication and mention of the opposition decision: **21.11.2007**
(45) Mention of the grant of the patent: 26.08.1998
(21) Application number: 92903843.8
(22) Date of filing: 12.12.1991
(51) Int. Cl.: C09K 5/04, C09K 3/30

(54) **USE OF CONSTANT BOILING COMPOSITIONS OF FLUORINATED HYDROCARBONS**
VERWENDUNG FLUORHALTIGER KOHLENWASSERSTOFFE MIT KONSTANTEM SIEDEPUNKT
UTILISATION DE COMPOSITIONS D'HYDROCARBURES FLUORES A POINT D'EBULLITION CONSTANT

(30) Priority: 17.12.1990 US 628000; 22.02.1991 US 659210
(43) Date of publication of application: 06.10.1993
(73) Proprietor: E.I. DU PONT DE NEMOURS AND COMPANY, Wilmington, Delaware 19898 (US)
(72) Inventor: BIVENS, Donald, Bernard, Kennett Square, PA 19348 (US); SHIFLETT, Mark, Brandon, Newark, DE 19711 (US); YOKOZEKI, Akimichi, Wilmington, DE 19807 (US)
(74) Representative: Matthews, Derek Peter
(86) International application number: PCT/US1991/009144
(87) International publication number: WO 1992/011338

(56) References cited:
- EP-A- 0 400 894
- EP-A- 0 430 169
- WO-A-91/09090
- US-A- 4 978 467
- The NIST Workshop on Property Data Needs for the Ozone Safe Refrigerants
- Article 14623 on pages 13, 14 of vol. 146 of Research Disclosure, 1976

## Description

This invention relates to the use of mixtures of pentafluoroethane (HFC-125) and difluoromethane (HFC-32) as replacements for Refrigerant 502 (R-502), a commercial binary azeotrope of chlorodifluoromethane (HCFC-22) and chloropentafluoroethane (CFC-115) that has been used as the refrigerant in numerous commercial applications.

### BACKGROUND OF THE INVENTION

Recently the long-term environmental effects of chlorofluorocarbons have come under substantial scientific scrutiny. It has been postulated that these chlorine-containing materials decompose in the stratosphere, under the influence of ultraviolet radiation, to release chlorine atoms. Chlorine atoms are theorized to undergo chemical reaction with the ozone layer in the stratosphere. This reaction could deplete or at least reduce the stratospheric ozone layer, thus permitting harmful ultraviolet radiation to penetrate the earth's protective ozone layer. A substantial reduction of the stratospheric ozone layer could have a serious deleterious impact on the quality of life on earth.

Refrigerant 502, the azeotropic mixture of about 47-50 weight percent HCFC-22 and 53-50 weight percent CFC-115 (the azeotrope is composed of 48.8 weight percent HCFC-22 and 51.2 weight percent CFC-115) has long been used as the refrigerant in most of the country's supermarket refrigeration cases. However, since CFC-115 is a chlorofluorocarbon compound which is being phased out by the year 2000, the industry is required to replace Refrigerant 502 with environmentally safer fluorinated hydrocarbons.

The tetrafluoroethanes (HFC-134 and its isomer (HCFC-134a) have been mentioned as possible substitutes. However, the low vapor pressures (relatively high boiling points) limit the refrigeration capacity of these compounds, making them undesirable in R-502 applications. Also, pentafluoroethane (HFC-125) has been suggested as a replacement for R-502, but its' energy efficiency (heat removed by the evaporator divided by the power to compress the vapor) is 10% lower than R-502. Consequently, newly designed equipment would be required to achieve the refrigeration currently needed for these supermarket applications.

Mixtures of environmentally safe materials might also be used if the desired combination of properties could be attained in a simple (not constant boiling) mixture. However, simple mixtures create problems in the design and operation of the equipment used in refrigeration systems. These problems result primarily from component separation or segregation in the vapor and liquid phases.

Azeotropic or constant boiling mixtures of two or more components, where the composition of the vapor and liquid phases are substantially the same at the temperatures and pressures encountered in the refrigeration cycle, would appear to be the answer. Included in the definition of constant boiling mixtures are near-azeotropic mixtures. US Patent No. 4,810,403 teaches that near-azeotropic mixtures maintain a substantially constant vapor pressure even after evaporative losses, thereby exhibiting constant boiling behaviour.

US 4 978 467 describes mixtures of pentafluoroethane (HFC-125) and difluoromethane (HFC-32) containing from 1 to 50 wt. % of HFC-125 with 50 to 99 wt. % of HFC-32 and states a preferance for mixtures containing 5 to 40 wt.% of HFC-125 and from 95 to 60 wt.% of HFC-32. Mixtures described in this document are not disclosed to be suitable as a replacement for refrigerant 502 and there is no hint that constant boiling behaviour exists outside these ranges.

A summary entitled 'NIST Workshop on Property Data Needs for the Ozone Safe Refrigerants' and referred to in a letter dated 11 October 1988, by James E. Hill and addressed to Workshop Attendees, refers to the possibility of mixing R-125 and R-32. This document does not disclose any specific compositions and does not give any guidance to prepare mixtures which are both non-flammable and constant-boiling.

It is an object of the present invention to provide the use of the composition defined in claim 1 as a replacement for refrigerant 502 in refrigeration equipment designed to operate with refrigerant 502..

### SUMMARY OF THE INVENTION

According to the present invention there is provided use of a substantially constant boiling non-flammable binary mixture which comprises 60 to 85 weight percent HFC-125 and 15 to 40 weight percent HFC-32 as a replacement for refrigerant 502 in refrigeration equipment, designed to operate with refrigerant 502.

Commercial applications of this invention will be as a replacement for R-502 in current commercial equipment. Unexpectedly, it has been found that compositions rather distant from the azeotropic composition (which is 18.5 weight percent HFC-125 and 81.5 weight percent HFC-32 determined at -15.3°C 484.0 kPa (70.2 psia)) remain substantially constant boiling; are non-flammable (since they contain far less than 60% of HFC-32); operate in refrigeration equipment at lower compression temperatures; match the surface tension of R-502, all being requirements for a replacement for R-502.

The compositions used in this invention for commercial operations comprise 15-40 weight percent HFC-32 and 60-85 weight percent HFC-125, e.g. 60.6 weight percent HFC-125 and 39.4 weight percent HFC-32; and the most preferred comprise 20-30 weight percent HFC-32 and 70-80 weight percent HFC-125.

The compositions used in this invention are particularly useful in refrigeration applications since they maintain their stability and their azeotrope-like properties at temperatures of -34°C (-30°F) to 46°C (115°F) and pressures of 196.5 kPa (28.5 psia) to 2861 kPa (415 psia) as shown in Examples 6-8 hereinafter. As a matter of information, the compositions of this invention may be used successfully at temperatures as low as -46°C (-50°F) to temperatures as high as 177°C (350°F).

The constant boiling compositions used in this invention exhibit dew and bubble points with virtually no pressure differentials. As is well known in the art, the difference between dew point and bubble point pressures is an indication of the constant boiling behavior of mixtures. The pressure differentials demonstrated by the substantially constant boiling mixtures of the invention are very small when compared with those of several known, non-azeotropic, binary compositions, namely, (50+50) weight percent mixtures of pentafluoroethane (HFC-125) and 1,1,1,2-tetrafluoroethane (HFC-134a) and chlorodifluoromethane (HCFC-22) and 1-chloro-1,1-difluoroethane (HCFC-142b), respectively. The pressure differentials demonstrated by the substantially constant boiling mixtures of the invention are also smaller than values for near azeotropic mixtures of HCFC-22, HFC-152a and HCFC-124 described in U.S. Patent No. 4,810,403.

These data are shown in Table 1. The (60 + 40) HFC-125 + HFC-32 composition is according to the invention, other compositions are comparative.

**TABLE 1**

| | Pressures kPa (psia) at 25°C | | |
|---|---|---|---|
| Refrigerant Composition | Dew Point | Bubble Point | Difference |
| (50+50) | 892.9 | 1.019.0 | 126.1 |
| HFC-125 + HFC-134a | (129.5) | (147.8) | (18.3) |
| (50+50) | 506.1 | 672.2 | 166.1 |
| HCFC-22 + HCFC-142b | (73.4) | (97.5) | (24.1) |
| (36+24+40) | | | |
| HCFC-22 + HFC-152a + | 570.9 | 655.7 | 84.8 |
| HCFC-124 | (82.8) | (95.1) | (12.3) |
| (10+90) | 1.694.0 | 1.694.7 | 0.7 |
| HFC-125 + HFC-32 | (245.7) | (245.8) | (0.1) |
| (18.5+81.5) | 1.688.8 | 1.688.8 | 0 |
| HFC-125 + HFC-32 | (244.8) | (244.8) | (0) |
| (25+75) | 1.676.8 | 1.680.3 | 3.5 |
| HFC-125 + HFC-32 | (243.2) | (243.7) | (0.5) |
| (50+50) | 1.623.0 | 1.636.1 | 13.1 |
| HFC-125 + HFC-32 | (235.4) | (237.3) | (1.9) |
| (60+40) | 1.589.9 | 1.602.5 | 18.6 |
| HFC-125 + HFC-32 | (230.6) | (233.3) | (2.7) |
| (90+10) | 1.441.7 | 1.458.2 | 16.5 |
| HFC-125 + HFC-32 | (209.1) | (211.5) | (2.4) |

It should be understood that one or more of the compounds shown in Table 2 can be combined with the substantially constant boiling binary mixtures of HFC-125/HFC-32 to provide ternary or higher substantially constant boiling mixtures for the use according to the invention while adding advantageous properties unique to the added component(s).

**TABLE 2**

| Nomenclature | Chemical Formula |
|---|---|
| HCFC-22 | CHClF₂ |
| HFC-134a | CF₃CH₂F |
| HFC-134 | CHF₂CHF₂ |
| HFC-143a | CH₃CF₃ |
| HFC-161 | CH₂FCH₃ |
| FC-218 | CF₃CF₂CF₃ |
| Propane | CH₃CH₂CH₃ |
| HFC-23 | CHF₃ |
| HFC-227ea | CF₃CHFCF₃ |

The invention will be more clearly understood by referring to the examples which follow.

### EXAMPLE 1 (COMPARATIVE)

A phase study was made on pentafluoroethane and difluoromethane wherein the composition was varied and the vapor pressures measured at a constant temperature of -15.3°C. An azeotropic composition was obtained, as evidenced by the maximum vapor pressure observed, and was identified as follows:
Pentafluoroethane = 18.5 ± 2 weight percent
Difluoromethane = 81.5 ± 2 weight percent
Vapor Pressure = 484.0 kPa (70.2 psia) at -15.3°c.

### EXAMPLE 2

A phase study was made on pentafluoroethane and difluoromethane to verify minimal fractionation and change in vapor pressure during a vapor loss.

A blend was prepared in a 75 cc stainless steel cylinder consisting of pentafluoroethane and difluoromethane. The cylinder was agitated with a magnetic stirrer and submerged in a constant temperature bath at 23.8°C. The vapor space was allowed to leak at a slow rate. The vapor pressure was constantly measured using a pressure transducer and the vapor was sampled at various times during the experiment and analyzed using a standard gas chromatography method. Initial and final liquid concentrations were also analyzed by gas chromatography. Initial liquid (IQ), final liquid (FQ), vapor compositions, vapor pressure data, and change in vapor pressure from the initial vapor pressure are presented in Table 3.

**TABLE 3**

| Sample | % Loss | Composition | | Vapor Pressure kPa (psia) | Change Pressure (%) |
|---|---|---|---|---|---|
| | | HFC-32 (wt.%) | HFC-125 (wt.%) | | |
| IQ | 0 | 39.4 | 60.6 | (226.5) 1.561.7 | 0 |
| 1 | 5.1 | 44.5 | 55.5 | (226.3) 1.560.3 | 0.09 |
| 2 | 10.3 | 43.4 | 56.6 | (226.2) 1.560.0 | 0.13 |
| 3 | 15.4 | 43.9 | 56.1 | (226.1) 1.558.9 | 0.19 |
| 4 | 20.6 | 43.8 | 56.2 | (225.9) 1.557.5 | 0.27 |
| 5 | 25.7 | 42.6 | 57.4 | (225.7) 1.556.1 | 0.35 |
| 6 | 30.8 | 43.0 | 57.0 | (225.5) 1.554.8 | 0.44 |
| 7 | 36.0 | 42.8 | 57.2 | (225.3) 1.553.4 | 0.53 |
| 8 | 41.1 | 42.8 | 57.2 | (225.1) 1.552.0 | 0.62 |
| 9 | 46.2 | 42.4 | 57.6 | (224.9) 1.550.6 | 0.71 |
| 10 | 51.4 | 41.6 | 58.4 | (224.6) 1.548.6 | 0.84 |
| 11 | 56.5 | 41.1 | 58.9 | (224.2) 1.545.8 | 1.02 |
| 12 | 61.7 | 40.5 | 59.5 | (223.9) 1.543.7 | 1.15 |
| 13 | 66.8 | 39.7 | 60.3 | (223.5) 1.540.0 | 1.32 |
| 14 | 71.9 | 38.7 | 61.3 | (223.0) 1.537.5 | 1.55 |
| 15 | 77.1 | 37.7 | 62.3 | (222.4) 1.533.4 | 1.81 |
| 16 | 82.2 | 36.0 | 64.0 | (221.6) 1.527.9 | 2.16 |
| 17 | 87.4 | 33.7 | 66.3 | (220.5) 1.520.5 | 2.65 |
| FQ | 89.2 | 27.0 | 73.0 | (220.0) 1.516.8 | 2.87 |

These data demonstrate that with more than 80% of the original charge depleted, the vapor pressure has remained substantially constant (2.87% change). It is important to note that the difluoromethane concentration has gone down in both the liquid and vapor phases during leakage. Therefore, since the initial concentration is nonflammable, recognizing that difluoromethane is flammable, the blend will not become flammable in the event of vapor loss.

### EXAMPLES 3-9

Evaluation of the refrigeration properties of the mixtures of the invention versus other HFC-125 / HFC-32 mixtures, HCFC-22, Refrigerant 502 and pentafluoroethane (HFC-125) alone, are shown in Table 4.

**TABLE 4**

| COMPARISON OF REFRIGERATION PERFORMANCE | | | | | | | | | | |
|---|---|---|---|---|---|---|---|---|---|---|
| | Control | Control | Control | Ex. 3* | Ex. 4* | Ex. 5* | Ex. 6 | Ex. 7 | Ex. 8 | Ex. 9* |
| | | | | | Weight Percentages | | | | | |
| | | | | 10/90 | 18.5/81.5 | 50/50 | 60/40 | 70/30 | 80/20 | 90/10 |
| | BCFC-22 | R-502 | BFC-125 | 125/32 | 125/32 | 125/32 | 125/32 | 125/92 | 125/32 | 125/32 |
| Evaporator Temp. | | | | | | | | | | |
| deg C | -34.4 | -34.4 | -34.4 | -34.4 | -34.4 | -34.4 | -34.4 | -34.4 | -34.4 | -34.4 |
| (deg F) | (-30) | (-30) | (-30) | (-30) | (-30) | (-30) | (-30) | (-30) | (-30) | (-30) |
| Evaporator Pressure | | | | | | | | | | |
| kPa | 135.1 | 165.5 | 184.1 | 233.7 | 233.0 | 226.8 | 222.0 | 215.8 | 207.5 | 196.5 |
| (psia) | (19.6) | (24.0) | (26.7) | (33.9) | (33.8) | (32.9) | (32.2) | (31.3) | (30.1) | (28.5) |
| Condenser Temp. | | | | | | | | | | |
| deg C | 46.1 | 46.1 | 46.1 | 46.1 | 46.1 | 46.1 | 46.1 | 46.1 | 46.1 | 46.1 |
| (deg F) | (115) | (115) | (115) | (115) | (115) | (115) | (115) | (115) | (115) | (115) |
| Condenser Pressure | | | | | | | | | | |
| kPa | 1,779 | 1,944 | 2,255 | 2,861 | 2,841 | 2,730 | 2,475 | 2,613 | 2,517 | 2,406 |
| (psia) | (258) | (282) | (327) | (415) | (412) | (396) | (388) | (379) | (365) | (349) |
| Compressor Discharge | | | | | | | | | | |
| Temp. | | | | | | | | | | |
| deg C | 151 | 115 | 106 | 181 | 174 | 149 | 140 | 132 | 123 | 115 |
| (deg f) | (303) | (239) | (223) | (357) | (345) | (300) | (284) | (269) | (254) | (239) |
| Coefficient of Performance | 1.97 | 1.89 | 1.69 | 1.81 | 1.81 | 1.80 | 1.79 | 1.77 | 1.75 | 1.71 |
| Refrigeration Capacity | | | | | | | | | | |
| kW | 1.35 | 1.41 | 1.40 | 2.18 | 2.14 | 1.97 | 1.88 | 1.79 | 1.67 | 1.53 |
| (Btu/min) | (76.6) | (80.0) | (79.4) | (124) | (122) | (112) | (107) | (102) | (95) | (87) |
| Surface Tension (dyne/cm) | -- | 14.7 | -- | 18.2 | -- | 16.2 | 15.7 | -- | 14.4 | -- |

| | | | | | | | | | | |
|---|---|---|---|---|---|---|---|---|---|---|
| * Examples 3, 4, 5 and 9 are comparative and not according to the invention. | | | | | | | | | | |

"Coefficient of Performance" (COP, is the ratio of net refrigeration effect to the compressor work. It is a measure of refrigerant energy efficiency.

Net refrigeration effect is the change in enthalpy of the refrigerant in the evaporator, i.e., the heat removed by the refrigerant in the evaporator. Refrigeration Capacity is based on a fixed compressor displacement.

For a refrigeration cycle typified by the conditions shown in Table 4 for the evaporator and the condenser, the COP's shown in the examples of the invention are higher than the COP of pentafluoroethane (HFC-125) alone.

Important considerations in evaluating the performance data are compressor discharge temperature, surface tension, capacity and condenser pressure. R-502 was originally developed to replace HCFC-22 in applications with long refrigerant return lines to the compressor. Use of HCFC-22 resulted in high compressor discharge temperatures and early compressor failures. Lower compressor discharge temperatures are produced with R-502 due to the higher heat capacity of the CFC-115 component. Since one of the objectives of this invention was to develop a refrigerant to replace R-502 in existing commercial equipment with minimal changes, the replacement refrigerant must produce lower compressor discharge temperatures than with HCFC-22.

The comparative data in Table 4 indicate that the compressor discharge temperature of HCFC-22 is matched by the mixture of 50 weight percent HFC-32. Higher concentrations of HFC-32 would result in even higher discharge temperatures. It is obvious that concentrations of HFC-32 lower than 50 weight percent should be used to approach the discharge temperature of R-502. A match of compressor discharge temperatures for R-502 and the HFC-32/HFC-125 mixture occurs at about 10 weight percent HFC-32, and compressor design allowances would likely permit operation at somewhat higher temperatures, possibly up to 135°C (275°F), resulting in an HFC-32 concentration of about 35 weight percent.

Surface tension is another factor to consider. It is important in heat transfer performance of the refrigerant in condensers and evaporators where bubbles and droplets occur, in turn being related to system energy efficiency. In fact, it has been said that "Surface tension is one of the most important physical properties, especially when two-phase heat transfer occurs with bubble or droplet generation on surfaces." D. Jung and R. Radermacher, Transport Properties and Surface Tension of Pure and Mixed Refrigerants, ASHRAE TRANSACTIONS 1991., Vol. 97, Pt. 1. Since the object of this invention was to identify a refrigerant to replace R-502, preferably for use in existing commercial equipment with minimal changes, it would be advantageous to have similar values of surface tension for R-502 and the replacement mixture. Surface tension values were calculated by the method of Brock and Bird, AICHE Journal, Vol. 1, p. 174 (1955), and are shown in Table 4. A match of surface tension values with that of R-502 occurs at about 25% HFC-32. Higher values of surface tension are less desirable, as more energy is required to remove the bubbles or droplets from heat exchanger surfaces.

The data in Table 4 also indicate that the lower concentrations of HFC-32 provide capacity and condenser pressures closer to that of R-502. The mixtures of HFC-32 and HFC-125 may also be considered as replacements for HCFC-22. The data in Table 4 again indicate that the lower concentrations of HFC-32 (10-30%) provide capacity and condenser pressures closer to that of HCFC-22.

Additives such as lubricants, corrosion inhibitors, stabilizers, dyes and other appropriate materials may be added to the compositions of the invention for a variety of purposes, provided they do not have an adverse influence on the substantially constant boiling nature of the composition.

## Claims

1. Use of a substantially constant boiling non-flammable binary mixture which comprises 60 to 85 weight percent of HFC-125 and 15 to 40 weight percent of HFC-32 as a replacement for refrigerant 502 in refrigeration equipment, designed to operate with refrigerant 502.

2. Use according to claim 1, wherein the mixture contains 60.6 weight percent HFC-125 and 39.4 weight percent HFC-32.

3. Use according to claim 1, wherein the mixture comprises 70 to 80 weight percent of HFC-125 and 20 to 30 weight percent of HFC-32.

## Patentansprüche

1. Verwendung einer im Wesentlichen konstant siedenden, nicht brennbaren binären Mischung, die 60 bis 85 Gewichtsprozent HFC-125 und 15 bis 40 Gewichtsprozent HFC-32 umfasst, als Ersatzstoff für Kältemittel 502 in einer Kühlvorrichtung, welche für den Betrieb mit Kältemittel 502 entworfen wurde.

2. Verwendung nach Anspruch 1, wobei die Mischung 60,6 Gewichtsprozent HFC-125 und 39,4 Gewichtsprozent HFC-32 enthält.

3. Verwendung nach Anspruch 1, wobei die Mischung 70 bis 80 Gewichtsprozent HFC-125 und 20 bis 30 Gewichtsprozent HFC-32 umfasst.

## Revendications

1. Utilisation d'un mélange binaire ininflammable à point d'ébullition sensiblement constant qui comprend 60 à 85% en poids de HFC-125 et 15 à 40% en poids de HFC-32 en remplacement du réfrigérant 502 dans un équipement de réfrigération conçu pour opérer avec le réfrigérant 502.

2. Utilisation selon la revendication 1, dans laquelle le mélange contient 60,6% en poids de HFC-125 et 39,4% en poids de HFC-32.

3. Utilisation selon la revendication 1, dans laquelle le mélange comprend 70 à 80% en poids de HFC-125 et 20 à 30% en poids de HFC-32.
